# EUROPEAN PATENT APPLICATION

(11) **EP 1 464 534 A2**
(43) Date of publication of application: **06.10.2004**
(21) Application number: 04380073.9
(22) Date of filing: 31.03.2004
(51) Int. Cl.: B60N 2/68, B60N 2/20

(54) **Folding convertible seat for vehicles with an attachment system for safety belts**

(30) Priority: 02.04.2003 ES 200300808
(71) Applicant: Julio Diaz, Fernandez, 48610 Urduliz (Vizcaya) (ES)
(72) Inventor: Julio Diaz, Fernandez, 48610 Urduliz (Vizcaya) (ES)
(74) Representative: De Pablos Riba, Julio

(57) **Abstract**

The convertible folding seat for vehicles with an attachment system for seat belts has two catches or pulls at either one of the upper ends of the front side of the frame. One permits the horizontal movement of the seat assembly in any direction. The second catch or pull governs the seat back fastening system; it keeps the seat back fastening system locked or allows it to be folded back and the other seat rest modules to be moved. For this purpose it is provided with hooks or similar anchoring elements - installed on the sides of each of the pyramidal structures that are inside the seat frame - in which the transverse lugs are anchored that are provided on the U-section on the lower extension which is installed on the semi-pyramid when placing the seat back in the vertical position. When we pull the catch a cable or the like is tightened, pulling the spring that in turn brings about a raising movement of the hook to release the lug, which remained locked in the home position of the hook. When released, the seat back is pushed manually and it folds back forming a bed. The three anchor points of the seat belts are located on the structure forming the seat in such a way that the seat belts are operational no matter what the horizontal position of the seat. All the operations may be manual or automatic.

## Description

### Object of the invention

The object of the invention is a seat with a backward folding back so that we may convert it into a bed by means of a simple operating system that may be made automatic. The front of the seat is provided with catches or pulls, one of which permits the horizontal sliding of the seat, changing it to the most suitable position depending on whether it is going to be used as a conventional seat or as a bed while the other catch governs the mechanism that enables the seat back to be folded down to convert it into a bed. Furthermore, when the three seat belt anchor points are positioned in the frame assembly that forms the vehicle seat vehicle, these are operational whatever the horizontal position taken up by the seat.

### Background of the invention

Constant development in the automotive world in search of comfort and improved safety have brought about tremendous progress with regard to new materials and new designs. More specifically, more interior comfort is sought in vehicles by means of optimum use of the space available. Seats have undergone considerable changes in their designs and more ergonomic finishes have been achieved in the quest for the user's utmost comfort.

Today, all front seats are reclining and the back ones folding. Starting from this premise, techniques have gone on advancing in manners of folding, in regulating mechanisms and in electronic adjustment systems that memorize preset positions. All the advances and innovations are aimed at the front seats, leaving the rear seats for a more functional use. Further, on none of the currently existing seats with a backward folding back can "three-point" seat belts be used when the position of the seat is moved in a horizontal direction away from the attachment point of the belt anchored to the frame or the vehicle body. This innovation solves the need to fit backward folding seats with "three-point" seat belts, which are considered the safest for the user, without this representing a loss or limitation of the mobility of horizontal movement of the seat. To achieve this, innovative mechanisms and fixing systems have been developed with a performance that is unknown in the state of the art.

### Description

The convertible seat for vehicles covered by this invention is made up of a box-like frame with a base and four adjoining sides. The base of the frame has an outline with a series of holes spaced apart from one another in an intermittent way for anchoring to conventional seat belts on the floor of the vehicle in an appropriate way, allowing for the horizontal movement of the seat in all four directions. The area corresponding to the folding back is made of a series of shapes joined by a shaft, the central are necessarily U-section, while the shapes at the sides of the back may either be U- or L-section. The bottom of the frame has two rectangular-based semi-pyramidal structures (10) which are needed so as to be able to use the back shapes (3) to make up a firm and secure structure [(6) and (3)] for the seat in the vertical position - this is achieved thanks to a carefully studied design and to a novel development of the attachment mechanism - and to locate on its outer profile one of the three anchor points of the seat belt, namely the female one (9). The first anchor point of the seat belts corresponds to the spool containing the seat belt; it is located in one of the cavities machined in the longitudinal sides of the box. Preferably plates or 90° reinforcement angles, fused to the base in the form of a diaphragm, will be provided in order to assure this anchorage. The second anchor point is at the point of issue of the belt fitted to the upper end of the shapes that make up the folding back, at which a conventional rail is installed to permit the travel of the belt, which will be attached to the shape by means of braces, namely plates or 90° reinforcement angles fused to the base in the form of a diaphragm. The third anchor point corresponds to the female of each of the seat belt buckles and will be situated on whether the user's right or left depending on access and the interior design of the vehicle. On a three-place seat a female will be located at the right or left-hand side of the frame and the other two at the pyramidal structures that are inside the seat frame attached to an extension located at one of the edges of the front side in accordance with the set order. We should remember that this anchorage will preferably be provided with plates or 90° reinforcement angle brackets fused to the front side of the semi-pyramid where it is located in order to assure this anchorage. In addition, the novel system described for the attachment of the three-point anchorage of the seat belts to the assembly that makes up the seat permits the seat belts to be operational in any horizontal position. All the operations may be manual or automatic.

The seat has two catches or pulls that may be located at either of the outer upper ends of the front side of the frame. One permits the horizontal movement of the seat assembly in any direction,, and the second catch or pull governs the seat back attachment system; it keeps the seat back locked in the vertical position or permits it to be folded backwards and the other seat rest modules to be moved. The attachment system is provided with hooks or similar anchoring fixtures - installed on the sides of each of the pyramidal structures that are inside the seat frame - in which the transverse lugs are anchored that are provided on the U-section which makes up the seat back on the lower extension installed on the semi-pyramid when placing the seat back in the vertical position. When we pull the catch, a cable or the like is tightened, pulling the spring that in turn brings about a raising movement of the hook, thereby releasing the lug which remained trapped in the hook home position. When released, the seat back is pushed manually backwards to fold it down approximately 90°. This angular movement raises and draws the seat together with the back until the two elements form a horizontal surface once the turning and raising movements are completed. This is possible because both elements are connected to the shaft by means of a hinge system or similar - the shaft is located on the inside of the angle formed by the seat back and the seat when they are in the normal position - which is the connecting tie of both rest modules. The bed is completed with a system that allows the surface to be modified with numerous various in its form through being able to make use of it individually or jointly; thanks to the dentate form of its top edge, which acts as a headrest, the seat back is extended by engagement with the negative of the afore-mentioned dentation offered by the boot or the supplement of the seat immediately behind. In addition, folded below the seat and/or the boot there is another ancillary seat that is attached by means of a hinge or the like, thus enabling the useful area of the bed to be extended in any direction by turning it through 180° until lining it up with the horizontal surface forming the seat and the back, or else to act as a supplement for attaching the dentate back of the front seat

In order to facilitate the understanding of the object of the present invention we now go on to describe a preferred embodiment of the convertible seat, making use of the figures attached.

### Short description of the figures

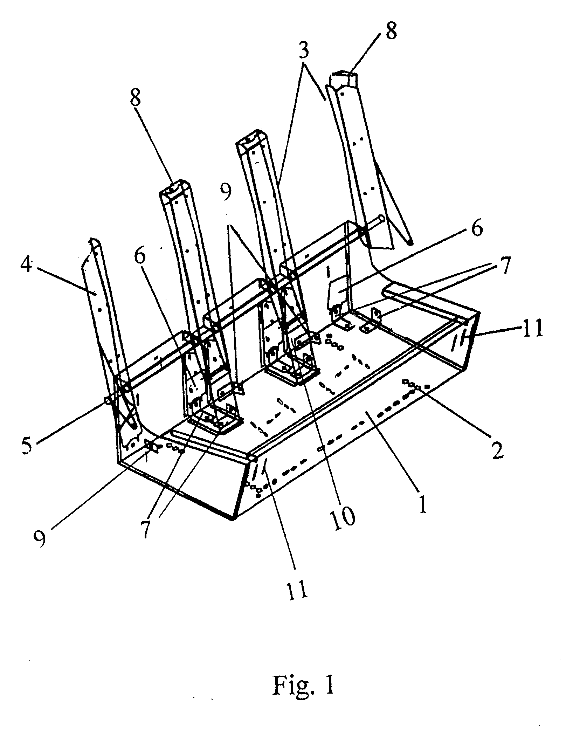

Figure 1 shows the internal structure of the convertible seat.
Figure 2 shows the convertible seat in its normal position with the seat belt anchor points.
Figure 3 shows the convertible seat when the back has been folded down, converting it into a bed.

### Description of a preferred embodiment

The seat structure assembly is made up of a box-like frame with a base and four adjoining sides. The base of the frame (1) has a profile with a series of holes (2) spaced apart from one another in an intermittent way for anchoring to conventional seat belts located in an appropriate way on the floor of the vehicle, allowing for the horizontal movement of the seat in all four directions. It also shows us how the folding seat back is made up of a series of shapes (3) joined by a shaft (5), the central being necessarily U-section, while the shapes at the sides of the back may either be U- or L-section. The bottom of the frame has two rectangular-based semi-pyramidal structures (10) which are needed so as to be able to use the seat back shapes (3) to make up a firm and secure structure [(10) and (3)] for the seat back in the vertical position and to locate on its outer profile one of the three anchor points of the seat belt, namely the female one (9). The spool containing the seat belt occupies the first anchor position; it is located below each of the seat back shapes (3) and is located in the angle that is formed with the longitudinal wall which has cavities (6) machined for the purpose of permitting access for replacing or repairing the spool, recessing the spool on the lower horizontal side of the access cavity and securing it to the base of the box at two points, which will be provided with plates or reinforcement angle brackets (7), for assuring its anchorage, which may be free or fused to the base in the form of a diaphragm. The second anchor point is at the point of issue of the belt at the upper end of the shapes (8) that make up the folding back, at which a conventional rail is installed, fastened to the shape by means of the use braces, namely plates or 90° reinforcement angle brackets either free or fused to the base in the form of a diaphragm. The third anchor point corresponds to the female (9) of each of the seat belt buckles and will be situated on whether the user's right or left depending on the requirements of the vehicle and the user's needs. On a three-place seat a female will be located at the right or left-hand side of the frame (9) and the other two at the pyramidal structures that are inside the seat frame attached to an extension located at one of the edges of the front side, in accordance with the set order, which acts as an anchorage (9). We should remember that this anchorage will preferably be provided with plates or 90° reinforcement angle brackets (9) fused to the front side of the semi-pyramid where it is located in order to assure this anchorage. In addition, the novel system described for the attachment of the three-point anchorage of the seat belts to the assembly that makes up the seat permits the seat belts to be operational in any horizontal position. All the operations may be manual or automatic.

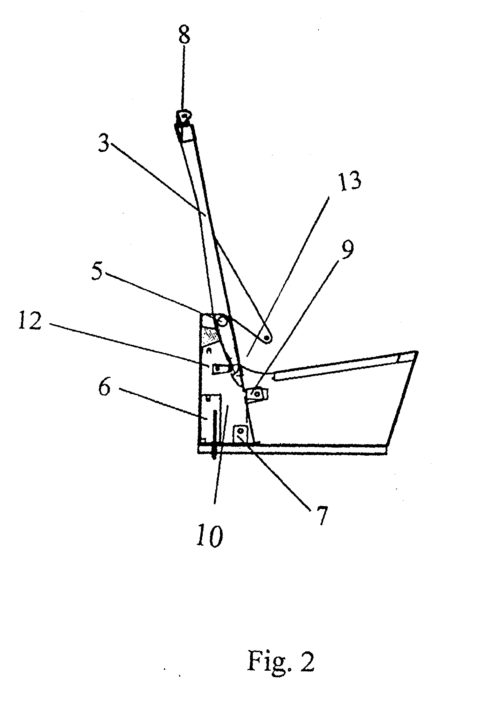

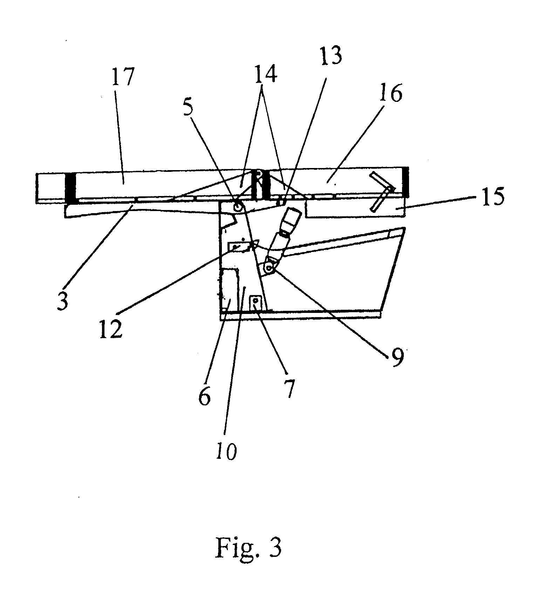

The seat has two catches or pulls (11) that may be located at either of the outer upper ends of the front side of the frame. One permits the horizontal movement of the seat assembly in any direction,, and the second catch or pull (11) governs the seat back attachment system, which is shown in figures 2 and 3; it keeps the vertical position of the seat back (2) assured or releases it so that it may be folded backwards and the other ancillary seats deployed. The attachment system is provided with hooks (12) or similar anchoring fixtures - installed on the sides of each of the pyramidal structures (10) that are inside the seat frame (1) - in which the transverse lugs (13) are anchored that are provided on the U-section which is installed on the semi-pyramid (10) when placing the seat back in the vertical position. When we pull the catch (11) a cable or the like is tightened, pulling the spring that in turn brings about a raising movement of the hook (12) , thereby releasing the lug (13) which remained trapped in the hook (12) home position. When released, the seat back is pushed manually backwards to fold it down approximately 90°. This angular movement raises and draws the seat (16) together with the back (17) until the two elements form a horizontal surface once the turning and raising movements are completed. This is possible because both elements are connected to the shaft by means of a hinge system (14) or similar - the shaft is located on the inside of the angle formed by the seat back and the seat when they are in the normal position - which is the connecting tie of both rest modules. The bed is completed with a system which permits the surface to be modified with numerous various in its form through being able to make use of it individually or jointly; thanks to the dentate form of its top edge, which acts as a headrest, the seat back is extended by engagement with the negative of the afore-mentioned dentation offered by the boot or the supplement of the seat (15) immediately behind. In addition, folded below the seat (16) there is another ancillary seat (15) that enables the useful area of the bed to be extended by turning it through 180° until lining it up with the horizontal surface forming the seat and the back, or else to act as a supplement for attaching the dentate back of the front seat

Having adequately described the nature of the present invention as well as how to put it into practice, it only remains for us to add that it is possible to introduce changes of form, materials and arrangement in the assembly as a whole and the parts composing it, providing that these alterations do not substantially change the features of the invention claimed hereinunder.

## Claims

1. A folding convertible seat for vehicles with an attachment system for seat belts, **characterised in that** it integrates into a single structure or frame (1) a convertible seat for vehicles with a backward folding seat back (17), which has complete autonomy of horizontal movement and is provided with a system of fastening "three-point" seat belts, which remains fully operational and effective in any position to which the seat may be moved.

2. A folding convertible seat for vehicles with an attachment system for seat belts according to claim 1 **characterised in that** it is fitted with the three seat belt anchoring points on the assembly making up the seat; the spool containing the seat belt occupies the first anchor position and is located below each of the seat back shapes (3); it is located in the angle that is formed with the longitudinal wall which has cavities (6) machined for the purpose of permitting access for replacing or repairing the spool, recessing the spool in the lower horizontal side of the access cavity and also having to secure it to the base of the box at two points (7), which will be provided preferably with plates or reinforcement angle brackets (7), for assuring its anchorage, which may be free or fused to the base in the form of a diaphragm; the second anchor point is at the point of issue of the belt at the upper end of the shapes (8) that make up the folding back, where a conventional eyebolt is installed for the seat belt to slide, fastened to the shape by means of the use braces, namely plates or reinforcement angle brackets, which may be either free or fused to the base in the form of a diaphragm (9). Lastly, the third anchor point corresponds to the female (9) of each of the seat belt buckles and will be situated on whether the user's right or left depending on the requirements of the vehicle and the user's needs, namely, on a three-place seat a female will be located at the right or left-hand side of the frame (1) and the other two at the pyramidal structures (10) that are inside the seat frame (1)attached to an extension, which acts as an anchorage (9) provided for locking purposes preferably with plates or angle brackets (9), located at one of the edges of the front side, in accordance with the set order.

3. A folding convertible seat for vehicles with an attachment system for seat belts according to claim 1 **characterised in that** the seat has two catches or pulls (11) which may be located at either of the upper ends of the front side of the frame; one permits the horizontal movement of the seat assembly in either direction, and the other catch or pull (11) governs the seat attachment system, which is shown in figures 2 and 3, keeping the seat back fastening system (20) locked or released. So that it may be folded back and modified the attachment system has hooks (12) or similar anchoring elements - installed on the sides of each of the pyramidal structures (10) that are inside the seat frame (1) - in which the transverse lugs (13) are anchored that are provided on the U-section which is installed on the semi-pyramid (10) when placing the seat back in the vertical position. When we pull the catch (11) a cable or the like is tightened, pulling the spring that in turn brings about a raising movement of the hook (12), thereby releasing the lug (13) which remained locked in the home position of the hook (12).

4. A folding convertible seat for vehicles with an attachment system for seat belts according to the previous claim **characterised in that** when released the seat back to fold it down approximately 90°. This angular movement raises and draws the seat (16) together with the back (17) until the two elements form a horizontal surface once the turning and raising movements are completed. This is possible because both elements are connected to the shaft by means of a hinge system (14) or similar.

5. A folding convertible seat for vehicles with an attachment system for seat belts according to claim 1 and four **characterised in that** when the turning and raising movements are completed the seat back (17) and the seat (16) form a horizontal surface that may be used as a bed and is securely attached to the vehicle boot as this forms a supplement to extend this bed. Thanks to the dentate form of the upper edge of the rear seat, which also acts as a headrest, the coupling takes place with the negative of the aforesaid dentate form offered by the edge of the boot.

6. A folding convertible seat for vehicles with an attachment system for seat belts according to claim one, four and five **characterised in that** folded under the seat and joined to by means of a hinge or the like there is another ancillary seat (17) with which we may extend the useful surface area of the bed by turning it through 180° until it is lined up with the horizontal surface formed by the seat (16) and the back (17) or else to act as a supplement for engaging the dentate back of the rear seat.
